Europäisches Patentamt

European Patent Office

Office européen des brevets

(11) Publication number: **0 062 366**
**B1**

(12) EUROPEAN PATENT SPECIFICATION

(45) Date of publication of patent specification: **03.07.85**

(51) Int. Cl.⁴: **G 11 B 23/00, G 11 B 7/26**

(21) Application number: **82200317.4**

(22) Date of filing: **11.03.82**

(54) Optically readable information disc and method of manufacturing same.

(30) Priority: **27.03.81 NL 8101515**

(43) Date of publication of application:
**13.10.82 Bulletin 82/41**

(45) Publication of the grant of the patent:
**03.07.85 Bulletin 85/27**

(84) Designated Contracting States:
**DE FR GB IT NL SE**

(56) References cited:
**DE-A-2 928 512**
**GB-A-1 579 709**
**GB-A-1 581 511**
**GB-A-2 052 543**

(73) Proprietor: **N.V. Philips' Gloeilampenfabrieken**
**Groenewoudseweg 1**
**NL-5621 BA Eindhoven (NL)**

(72) Inventor: **Lippits, Gerardus Johannes**
**Meinardus**
**c/o INT. OCTROOIBUREAU B.V. Prof. Holstlaan 6**
**NL-5656 AA Eindhoven (NL)**
Inventor: **Kloosterboer, Johan George**
**c/o INT. OCTROOIBUREAU B.V. Prof. Holstlaan 6**
**NL-5656 AA Eindhoven (NL)**
Inventor: **Melis, Godefridus Petrus**
**c/o INT.OCTROOIBUREAU B.V. Prof. Holstlaan 6**
**NL-5656 AA Eindhoven (NL)**

(74) Representative: **Weening, Cornelis et al**
**INTERNATIONAAL OCTROOIBUREAU B.V. Prof.**
**Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

### Description

The invention relates to an optically readable information disc which comprises a substrate plate which on at least one side has an information layer formed from a lacquer which has been cured under the influence of radiation, the information layer comprising an optically readable information track having information areas situated alternately at a higher level and at a lower level along the track.

Such an information disc is known from Netherlands Patent Application 76.11.395 in the name of Applicants.

In the manufacture of this known disc, lacquers on the basis of acrylic acid esters (acrylates) are used which comprise a mixture of various acrylates. These multicomponent lacquers notably comprise a large quantity of 60—90% by weight of a monoacrylate in combination with 8—20% by weight of a diacrylate, triacrylate, or tetraacrylate. In particular the combination of a large quantity of a monoacrylate with approximately 20% by weight of a diacrylate and/or a triacrylate frequently occurs. In Netherlands Patent Application 7.803.069 which relates to multilayer information discs, radiation-curable lacquers, particularly lacquers curable by ultraviolet light are mentioned which comprise 50—80% by weight of a monoacrylate, 5—40% by weight of a di-, tri- or tetra-acrylate, as well as 1—3% by weight of an initiator. In the examples of the last-mentioned Netherlands Patent Application, a multicomponent lacquer is described which comprises 78% by weight of 2-ethylhexyl acrylate, 20% by weight of 1,1,1-trimethylolpropane triacrylate and 2% by weight of benzoin-isobutyl ether (initiator).

The use of multicomponent lacquers is feasible, because the lacquers have to satisfy a great number of often contradictory requirements. A person skilled in the art will endeavour to reach the desired diversity in lacquer properties by mixing various components which mutually have different physical and chemical properties and try to find a suitable compromise between the contradictory requirements.

There exists a clear tendency towards the use of ever more complicated multicomponent lacquers in applications having an extensive pattern of requirements.

In this connection it is to be noted that radiation-curable lacquers when used in information discs have to satisfy an extensive combination of requirements, for example:

1. low viscosity, so that smaller layer thicknesses can be realized; in larger layer thicknesses the shrinkage may give rise to deformation of the underlying substrate.

2. rapid and good curing;

3. good adhesion to the substrate plate;

4. no adhesion to the metal matrix surface which is used in manufacturing the information disc;

5. suitable for being provided, after curing, with a reflective layer, for example a layer of silver or aluminium;

6. optically transparent;

7. after curing, non-deformable and chemically stable also under varying climatological conditions.

Applicants have moved away from the above mentioned tendency to develop and use a complicated multicomponent lacquer in case of complicated requirements.

According to the invention there is provided an information disc of the type mentioned in the opening paragraph which is characterized in that, in addition to the usual auxiliary substances applied in a quantity by weight from 0.1 to 5%, the lacquer comprises only one monomeric compound which is cross-linkable under the influence of radiation in a quantity by weight from 95—99.9% which is selected from the group consisting of alkanediol diacrylates, alkanediol dimethacrylates, alkeneglycol diacrylates and alkeneglycol dimethacrylates having the acrylate or methacrylate groups in an end position, of which the alkane moiety has 4—12 carbon atoms and of which the alkylene glycol moiety which comprises two or more alkane groups separated from each other by oxygen atoms, also has 4—12 carbon atoms, in which the cured lacquer apart from the auxiliary substances comprises no or substantially no extractable material.

Applicants' Patent Application GB—A—2 052 543 discloses optically readable information discs manufactured from a radiation-curable resin derived from one or more acrylate or methacrylate oligomers.

The use of the monocomponent lacquer in the disc according to the invention not only has for its result that the above-mentioned requirements are satisfied but it also presents significant advantages with respect to the known use of multicomponent systems. A mono component lacquer is to be understood as a lacquer containing one cross linkable monomeric compound. A multicomponent lacquer comprises at least two cross-linkable monomeric compounds.

An advantage which is of clear practical importance, particularly for the production on a large scale of information discs, is that, due to the simplicity of the lacquer compositions, very pure lacquers can be obtained as a result of which an excellent quality of the information discs can be achieved in a reproducible manner. Small contaminations which cannot be avoided in multicomponent lacquers often have a disastrous influence on the reproducibility of the manufacturing process and of the desired quality of the discs. In multicomponent lacquers quite a lot of isomers of the components will be formed or are present which adversely influence the reproducibility of the process and hence the quality of the resulting discs.

An essential feature is that the cured lacquer in the discs according to the invention comprises no or substantially no extractable materials. Experiments have demonstrated that the quality of the known information discs deteriorates in the course of time. Applicants have found that the quality deterioration results from the cured lacquer layer and have established in particular that even after a very long curing time (U.V. light curing), the cured multicomponent lacquers used in the known discs, comprise constituents which are sufficiently mobile to diffuse towards the surface of the cured lacquer layer. As a result of this the shape and hence the quality of the information track is adversely influenced in the long run. Such mobile components furthermore attack the reflective layer of, for example, vapour-deposited silver provided on the lacquer layer and reduce the adhesion of the reflective layer to the lacquer layer.

These problems are avoided with the optically readable information discs according to the invention.

The auxiliary substances used in the lacquer are, for example, photosensitive initiators in a quantity by weight from 0.1 to 5%, stabilizers in a quantity by weight from 0.01—0.05% and accelerators in a quantity by weight from 0—3%. A suitable photosensitive initiator, which upon exposure to, for example, ultraviolet light, forms radicals which initiate the desired polymerization reaction is an aromatic carbonyl compound, for example, a benzoin-isobutyl ether or a ketal, for example benzildimethylketal. A suitable stabilizer is the monomethyl ether of hydroquinone. An example of a useful accelerator is methyldiethanolamine.

Examples of readily useful acrylates or methacrylates used in the disc according to the invention and having acrylate groups or methacrylate groups in end position are:

1,6-hexanediol diacrylate; 1,6-hexanediol dimethacrylate, 1,7-heptanediol diacrylate; 1,7-heptanediol dimethacrylate; 1,8-octanediol diacrylate; 1,8-octanediol dimethacrylate; 1,10-decanediol diacrylate; 1,10-decanediol dimethacrylate; di-, tri-, and tetraethylene glycol diacrylate and di-, tri- and tetraethylene glycol dimethacrylate.

In a favourable embodiment of the information disc the lacquer comprises from 95—99.9% by weight of an alkanediol diacrylate, the alkane moiety of which comprises 6—10 carbon atoms. This applies in particular to a lacquer which comprises at least 96% by weight of 1,6-hexanediol diacrylate and for the remainder one or more auxiliary substances.

The invention furthermore relates to a method of manufacturing the information disc described above in which a layer of the described lacquer having a small layer thickness is provided between the surface of a transparent substrate plate and the surface of a matrix carrying an optically readable information track, the lacquer is cured at ambient temperature or at elevated temperature by irradiation *via* the transparent substrate, the substrate plate and the cured lacquer layer which adheres to the substrate and in which the information track is copied is removed from the matrix surface and the lacquer layer is post-cured by irradiation at ambient or at an elevated temperature.

It is to be noted that this process type generally is known from the above-mentioned Netherlands Patent Application 76,11,395. The special aspect of the method according to the invention is that the lacquer is port-cured after removal from the matrix surface by exposure to, for example, ultraviolet light. Another special aspect is that curing and/or postcuring is preferably carried out at an elevated temperature. It has been found that the extent of curing, or in other words the number of cross-links formed, is influenced by the temperature. By a suitable choice of the temperature level an optimum degree of polymerization can be realized. Good results are obtained with a temperature range from 30—120°C, in particular 30—90°C, for example 40—50°C. The layer thickness preferably is not more than 10 µm.

The invention will be described in greater detail by means of the example and with reference to the drawing, in which

Figures 1 and 2 are graphs in which the exposure time of a lacquer used in a known information disc is plotted on the horizontal axis and the percentage of the residue of the lacquer after extraction with chloroform is plotted on the vertical axis, and

Figures 3 and 4 are graphs showing the percentage of the residue of the lacquer material used in the disc according to the invention after extraction with chloroform as a function of the exposure time.

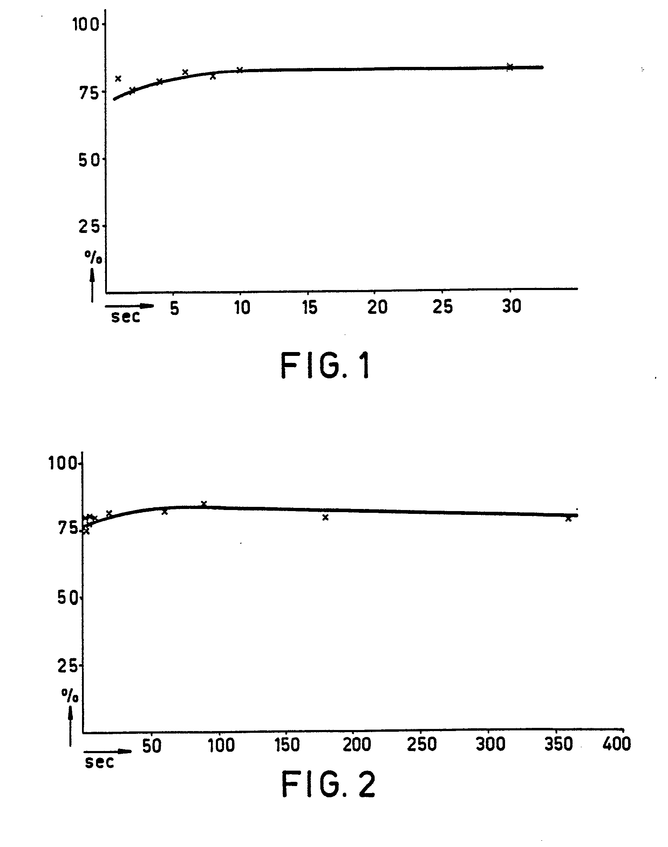

The data shown in Figures 1 to 4 have resulted from experiments in which a glass plate (Pyrex glass) having an area of $5 \times 5$ cm$^2$ was provided with a 10 µm thick layer of a lacquer curable by ultraviolet light. The data recorded in Figures 1 and 2 relate to a known multicomponent lacquer for use in information discs having the following composition:

58% by weight of tripropylene glycol diacrylate
28% by weight of N-vinylpyrrolidone
10% by weight of teimethylolpropane triacrylate
4% by weight of benzildimethylketal.

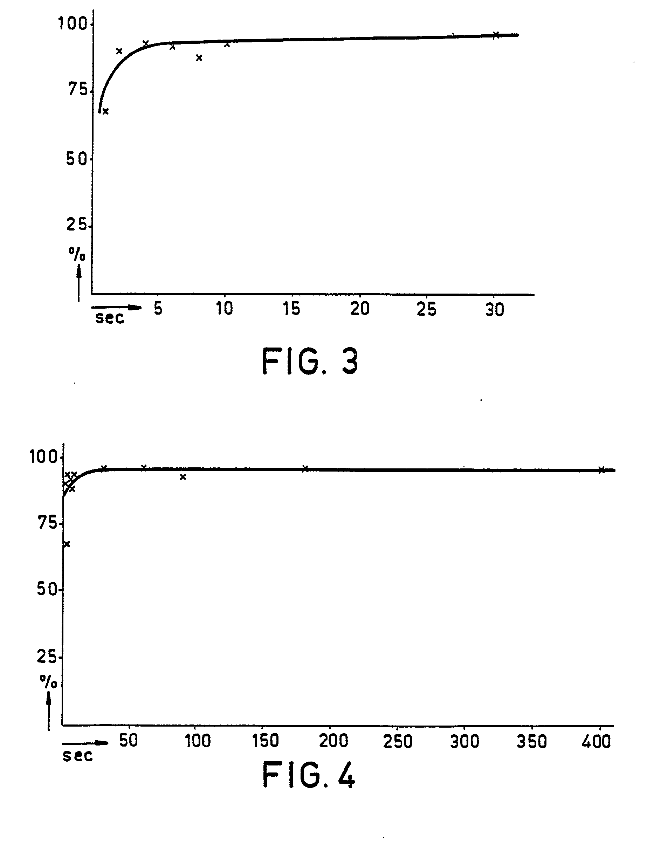

The data recorded in Figures 3 and 4 relate to a lacquer (containing a single cross-linkable component) used in the disc according to the invention and comprising 96% by weight of 1,6-hexanediol diacrylate and 4% by weight of benzildimethylketal.

The glass plate with lacquer layer was exposed to ultraviolet light with an intensity of 10 mW/cm$^2$ on the layer. The exposure time in seconds of the various experiments is plotted on the horizontal in the graphs of Figures 1 to 4. The glass plate with the cured lacquer layers was immersed for 18 hours in chloroform and then dried to constant weight. The loss of weight as a result of the extraction with chloroform was determined. The weight of the residue was expressed in percent by weight of the original weight of the lacquer layer and is recorded in the graphs of Figures 1 to 4 as a function of the exposure time. The results clearly indicate that the lacquer used in the disc according to the invention comprises no or substantially no extractable material already after an exposure time of approximately 10 seconds (see Figure 3) apart from the benzyldimethylketal (initiator). The known lacquer on the contrary shows, even at exposure times of hundreds of seconds (see Figure 2), a considerable loss of weight in the order of magnitude from 15 to 20% by weight.

The information disc according to the invention may be manufactured as follows.

A quantity of 5 cm³ of a lacquer curable by ultraviolet light is provided on the surface of a nickel matrix which is provided with an optically readable information track. The lacquer comprises 96% by weight of 1,6-hexanediol diacrylate and 4% by weight of 2,2-dimethoxy-2-phenylacetophenone (benzildimethylketal). In the manner described in Netherlands Patent Application 7,702,702 in the name of Applicants, a substrate plate of polymethylmethacrylate having a diameter of 30 cm and a thickness of 1.2 mm is provided on the lacquer. For this purpose the substrate plate is slightly vaulted and pressed centrally on the lacquer deposit. The lacquer will spread with a circular liquid front over the surface of the matrix while simultaneously the vaulted substrate plate flattens. In the final position the substrate plate lies on the formed lacquer layer without internal stresses. The matrix together with lacquer layer and substrate plate is rotated at a rate of 2,000 rpm. The excess of lacquer is removed. The resulting thickness of the lacquer layer was 1.5 µm. The assembly is brought to a temperature of 80°C and the lacquer layer is then exposed to ultraviolet light via the transparent substrate plate for a few seconds. The light intensity was 1.8 mW/cm² on the layer. After the exposure the resulting assembly of substrate plate and cured lacquer layer connected thereto is taken from the surface of the matrix and provided with a vapour-deposited layer of aluminium on the side of the lacquer layer.

## Claims

1. An optically readable information disc which comprises a substrate plate which on at least one side has an information layer of a lacquer cured under the influence of radiation, the information layer comprising an optically readable information track having information areas situated alternately at a higher level and at a lower level along the track, characterized in that, in addition to the usual auxiliary substances in a quantity by weight from 0.1 to 5%, the lacquer comprises only one monomeric compound which is cross-linkable under the influence of radiation in a quantity by weight from 95—99.9% which is selected from the group consisting of alkanediol diacrylates, alkanediol dimethacrylates, alkeneglycol diacrylates and alkeneglycol dimethacrylates having the acrylate or methacrylate groups in an end position, of which the alkane moiety has 4—12 carbon atoms and of which the alkylene glycol moiety which comprises two or more alkane groups separated from each other by oxygen atoms also has 4—12 carbon atoms, in which the cured lacquer apart from the auxiliary substances comprises no or substantially no extractable material.

2. An optically readable information disc as claimed in Claim 1, characterized in that the lacquer comprises 95—99.9% by weight of an alkanediol diacrylate of which the alkane moiety comprises from 6 to 10 carbon atoms.

3. An optically readable information disc as claimed in Claim 2, characterized in that the lacquer comprises at least 96% by weight of 1,6-hexanediol diacrylate and for the remainder one or more auxiliary substances.

4. A method of manufacturing an optically readable information disc as claimed in any of the preceding claims in which a layer of a lacquer described in any of the preceding claims is provided in a small layer thickness between the surface of a transparent substrate plate and the surface of the matrix carrying an optically readable information track, the lacquer is cured at ambient temperature or at an elevated temperature by irradiation via the transparent substrate plate, the substrate plate and the cured lacquer layer which adheres to the substrate and in which the information track is copied is taken from the matrix surface and the lacquer layer is post-cured by irradiation at ambient or at an elevated temperature.

## Revendications

1. Disque d'information lisible par voie optique qui comporte une plaque constituant substrat, dont au moins une face est munie d'une couche d'information formée par un vernis qui est durci sous l'influence de rayonnement, la couche d'information comportant une piste d'information lisible par voie optique présentant des domaines d'information situés alternativement à un niveau plus élevé et à un niveau plus bas suivant la piste, caractérisé en ce qu'outre les substances auxiliaires usuelles, dans une quantité en poids de 0,1 à 5%, le vernis ne contient qu'un composé monomère réticulable sous l'influence de rayonnement dans une quantité en poids de 95 à 99,9% choisie dans le groupe constitué par les diacrylates d'alcanediol, diméthacrylates d'alcanediol, diacrylates d'alcèneglycol et diméthacrylates d'alcèneglycol, dont les groupes acrylate et méthacrylate se trouvent dans une position terminale, dont les parties d'alcane comptent 4 à 12 atomes de carbone et dont la partie d'alkylène glycol qui compte deux ou plusieurs groupes d'alcane séparés l'un de l'autre par un atome d'oxygène compte également 4 à 12 atomes de carbone, dans lesquels les vernis durcis, abstraction faite des substances auxiliaires, ne contiennent pas ou guère de matériau extractible.

2. Disque d'information lisible par voie optique selon la revendication 1, caractérisé en ce que le vernis contient 95 à 99,9% en poids d'un diacrylate de alcanediol, dont la partie d'alcane contient 6 à 10 atomes de carbone.

3. Disque d'information lisible par voie optique selon la revendication 2, caractérisé en ce que le vernis contient au moins 96% en poids de diacrylate de 1,6-hexanediol et pour le reste une ou plusieurs substances auxiliaires.

4. Procédé pour la réalisation d'un disque d'information lisible par voie optique selon l'une des revendications précédentes, dans lequel une couche de vernis décrite dans l'une des revendications précédentes est appliquée entre les surfaces d'une plaque de substrat transparente et la surface d'une matrice supportant une piste d'information lisible par voie optique, le vernis est durci à une température ambiante normale ou à une température plus élevée par rayonnement par l'intermédiaire du substrat transparent, la plaque de substrat et la couche de vernis durci, qui adhère au substrat et à laquelle est transmise la piste d'information est enlevée de la surface de matrice et la couche de vernis est post-durcie par rayonnement à la température ambiante normale ou à une température plus élevée.

**Patentansprüche**

1. Optisch auslesbare Informationsscheibe mit einer Substratplatte, die zumindest an einer Seite mit einer Informationsschicht aus einem mittels Strahlung ausgehärteten Lack bedeckt ist, wobei die Informationsschicht eine optische auslesbare Informationsspur enthält, die aus abwechselnd auf höherem und niedrigerem Niveau entlang der Spur liegenden Informationsgebieten besteht, dadurch gekennzeichnet, dass zusätzlich zu den üblichen Hilfsstoffen in einer Menge von 0,1 bis 5 Gew.% der Lack nur eine mittels Strahlung vernetzbare monomere Verbindung in einer Menge von 95 bis 99,9 Gew.% enthält, die aus der Gruppe mit Alkandioldiakrylaten, Alkandiol-Dimethakrylaten, Alkenglykol-Diakrylaten und Alkenglykol-Diamethakrylaten, wobei die Akrylate und Methakrylate sich in einer Endstellung befinden, von denen der Alkan-Anteil 4 bis 12 Kohlenstoffatome und der Alkylenglykol-Anteil, der zwei oder mehr Alkangruppen enthält, die voneinander durch Sauerstoffatome getrennt sind, ebenfalls 4 bis 12 Kohlenstoffatome enthält, wobei der ausgehärtete Lack neben den Hilfsstoffen kein oder nahezu kein extrahierbares Material enthält.

2. Optisch auslesbare Informationsscheibe nach Anspruch 1, dadurch gekennzeichnet, dass der Lack 95 bis 99,9 Gew.% eines Alkandiol-Diakrylat enthält, dessen Alkan-Anteil 6 bis 10 Kohlestoffatome enthält.

3. Optisch auslesbare Informationsscheibe nach Anspruch 2, dadurch gekennzeichnet, dass der Lack zumindest 96 Gew.% 1,6-Hexandiol-Diakrylat und für den Rest einen oder mehrere Hilfsstoffe enthält.

4. Verfahren zur Herstellung einer optisch lesbaren Informationsscheibe nach einem der vorangehenden Ansprüche, bei dem eine in einem der vorangehenden Ansprüche beschriebene Lackschicht mit geringer Schichtdicke zwischen der Oberfläche einer transparenten Substratplatte und der Oberfläche der Matrix mit einer optisch auslesbaren Informationsspur aufgebracht, der Lack bei Umgebungstemperatur oder bei erhöhter Temperatur durch Strahlung über die transparante Substratplatte ausgehärtet, die Substratplatte und die ausgehärtete Lackschicht, die am Substrat klebt und in der die Informationsspur kopiert wird, von der Matrixoberfläche abgenommen und die Lackschicht bei Umgebungstemperatur oder einer erhöhter Temperatur mittels Strahlung nachträglich ausgehärtet wird.

0 062 366

FIG. 1

FIG. 2

1

FIG. 3

FIG. 4